(19) Europäisches Patentamt
European Patent Office
Office européen des brevets

(11) **EP 1 452 766 A2**

(12) **EUROPÄISCHE PATENTANMELDUNG**

(43) Veröffentlichungstag:
   **01.09.2004   Patentblatt 2004/36**

(51) Int Cl.[7]: **F16F 7/108**, F16F 15/02,
   B61F 5/02

(21) Anmeldenummer: **04450040.3**

(22) Anmeldetag: **26.02.2004**

(84) Benannte Vertragsstaaten:
   **AT BE BG CH CY CZ DE DK EE ES FI FR GB GR HU IE IT LI LU MC NL PT RO SE SI SK TR**
   Benannte Erstreckungsstaaten:
   **AL LT LV MK**

(30) Priorität: **28.02.2003  AT 3022003**

(71) Anmelder: **Siemens SGP Verkehrstechnik GmbH 1110 Wien (AT)**

(72) Erfinder:
   • **Schleinzer, Gerald**
     **8047 Graz (AT)**
   • **Habenbacher, Hans**
     **8010 Graz (AT)**

(74) Vertreter: **Patentanwaltskanzlei Matschnig Siebensterngasse 54 1071 Wien (AT)**

(54)   **Koppelelement mit Mittel zum Bedämpfen von Resonanzschwingungen**

(57)   Die Erfindung betrifft ein Koppelelement (KOP) für ein Schienenfahrzeug, welches beispielsweise einen Wagenkasten mit einem Fahrwerk des Schienenfahrzeuges koppelt, wobei das Koppelelement (KOP) hinsichtlich auftretender Resonanzschwingungen im wesentlichen normal zu seiner Längsachse bedämpft und/oder betilgt ist.

SLI

Fig. 1

Fig. 2

EP 1 452 766 A2

**Beschreibung**

Die Erfindung betrifft ein Koppelelement für ein Schienenfahrzeug, welches beispielsweise einen Wagenkasten mit einem Fahrwerk des Schienenfahrzeuges koppelt.

Das Abrollen der Räder eines Schienenfahrzeuges auf den Schienen erzeugt Bewegungen des Rades im höherfrequenten Frequenzbereich. Trotz der Körperschalldämmwirkung von Primär- und Sekundärfederung kommt es dadurch oftmals zu einem erhöhten Geräuschpegel und auch zu Dröhnerscheinungen im Fahrzeuginneren.

Dieses Problem wird zur Zeit dadurch umgangen, daß Schienen häufig geschliffen, Räder reprofiliert werden oder gummigefederte Räder zum Einsatz kommen. Sogar der Einsatz einer aktiven Schwingungsminderung wird in Einzelfällen geplant und es existieren bereits entsprechende Prototypen. Allen diesen Lösungen ist gemeinsam, dass sie sehr teuer sind und im Falle des gummigefederten Rades im Hochgeschwindigkeitsverkehr HGV aus Sicherheitsgründen nicht zu Einsatz kommen.

Es ist somit eine Aufgabe der Erfindung, oben genannte Geräuschentwicklungen auf einfache und kostengünstig zu realisierende Weise wesentlich abzuschwächen.

Diese Aufgabe wird mit einem eingangs erwähnten Koppelelement dadurch gelöst, dass es hinsichtlich auftretender Resonanzschwingungen im Wesentlichen normal zu seiner Längsachse bedämpft und/oder betilgt ist.

Die Erfindung liegt in der Erkenntnis, dass die eingangs erwähnten Geräuschentwicklungen und Dröhnerscheinungen unter anderem von Koppelelementen übertragen werden. Es gibt verschiedene Arten von Koppelelementen. Sie dienen z. B. zur Führung des Fahrwerkes eines Schienenfahrzeuges, der Stabilisierung, der Dämpfung von Bewegungen, der Übertragung von Kräften (z. B. Gewicht, Traktion, Bremsen). Manche dieser Koppelelemente sind längliche Bauteile, die häufig in annähernd horizontaler Einbaulage im Schienenfahrzeug eingebaut sind. Beispiele für solche länglichen Koppelelemente sind etwa Schlingerdämpfer, Stangen für die Drehhemmung oder Längsmitnahmen zwischen Fahrwerksrahmen und Wagenkasten. Durch ein erfindungsgemäßes Dämpfen der Schwingungen dieser Koppelelemente, die im wesentlichen normal zu der Längsachse der Koppelelemente auftreten, kann die Geräuschübertragung stark verringert werden.

Bei einer konkreten technischen Ausführung der Erfindung sind dabei an dem und/oder in dem Koppelelement ein oder mehrere Mittel zum Bedämpfen und/oder Betilgen von im Wesentlichen normal zu seiner Längsachse auftretenden Resonanzschwingungen angebracht sind.

Beispielsweise umfassen bei einer ersten solchen konkreten Ausführungsform des erfindungsgemäßen Koppelelementes die Mittel zumindest einen Schwingungstilger, welcher an dem Koppelelement befestigt ist, und der aus zumindest einem Massenelement und zumindest einem Federelement besteht, und das Massenelement mit dem Federelement an dem Koppelelement befestigt ist, wobei das zumindest eine Federelement sowie das/die Massenelement(e) dermaßen aufeinander abgestimmt sind, dass bei einer Anregung des Koppelelementes mit einer Erregerfrequenz, welche in einem Bereich der zumindest einen Eigenfrequenz des Koppelelementes liegt bzw. mit dieser übereinstimmt, zumindest ein Teil der Schwingungsenergie des Koppelelementes auf das zumindest eine Massenelement und/oder das zumindest eine Federelement übergeht.

Durch die Verwendung eines solchen Tilgers kann eine einfache und rasche Abstimmung auf die Resonanz(en) des Koppelelementes erfolgen.

Für eine optimale Betilgung der Resonanzschwingungen eines Koppelelementes ist es zweckmäßig, wenn der zumindest eine Schwingungstilger im Bereich eines Schwingungsbauches der Eigenfrequenz der zu betilgenden Eigenschwingung an dem Koppelelement befestigt ist.

In diesem Sinne ist es auch eine Anordnung des Tilgers optimal, bei welcher der zumindest eine Schwingungstilger in etwa auf halber Länge des Koppelelementes befestigt ist.

Um keine unerwünschten Nebenmaxima in der dynamischen Steifigkeit zu erzeugen, ist es notwendig, dass das zumindest eine Federelement schwingungsdämpfende Eigenschaften aufweist.

Beispielsweise ist dazu das zumindest eine Federelement als Gummifeder ausgebildet.

Bei einer anderen Ausführungsform umfassen die Mittel einen Dämpfungsbelag, mit dem das Koppelelement an seiner Außen- oder Innenseite versehen ist. Auf diese Weise kann das Koppelelement hinsichtlich des notwendigen Bauraumes möglichst klein gehalten werden. Außerdem bietet diese Ausführungsform noch den Vorteil, dass die Wirksamkeit nur in geringem Maße von der Temperatur abhängig ist und zusätzlich keine Abstimmung auf die Resonanzfrequenz notwendig ist.

Grundsätzlich können aber verschiedene Ausführungsformen, etwa Dämpfungsbeläge oder Tilger etc. auch gemeinsam eingesetzt werden, um gegebenenfalls eine bessere Anpassung an eine Resonanz oder bessere tilgende/ dämpfende Wirkungen zu erzielen.

Bei einer einfachen und kostengünstigen Ausführungsform besteht der Dämpfungsbelag aus Blechstreifen, die beispielsweise an dem Koppelelement aufgeklebt sind, oder über eine dämpfende Zwischenschicht mit dem Koppelelement verbunden sind, beispielsweise mittels Kleben, Nieten, oder Schrauben.

Eine verbesserte Wirkung kann erzielt werden, wenn der Dämpfungsbelag aus mehreren Schichten besteht.

Bei einer konkreten Ausführungsform mit solch guten dämpfenden bzw. tilgenden Eigenschaften besteht der mehrschichtige Dämpfungsbelag aus einer Zwischenschicht aus einer viskoelastischen Masse, welche auf dem Koppelelement aufgebracht ist, und einer auf der Zwischenschicht haftenden Deckschicht aus einem metallischen Werkstoff bzw. einem kohlenstofffaserverstärkten Kunststoff (CFK) oder Kevlar besteht. Die Zwischenschicht ist auf dem Koppelelement beispielsweise wiederum angeklebt.

Eine weitere Ausführungsform, die sich insbesondere dadurch auszeichnet, dass kein zusätzlicher Bauraum notwendig ist und das Koppelelement besonders stabil ausgeführt werden kann, zeichnet sich dadurch aus, dass das Koppelelement zumindest abschnittsweise hohl oder doppelwandig ausgebildet und in den Hohlräumen mit einem dämpfenden Füllstoff gefüllt ist.

Weitere gute resonanzmindernde Effekte können schließlich auch noch erreicht werden, wenn das Koppelelement an seinen Enden elastisch gelagert ist und die Lager dämpfende Eigenschaften aufweisen. Beispielsweise handelt es sich bei den Lagern um Gummilager. deren Steifigkeit in mindestens einer Richtung im Wesentlichen normal auf eine Richtung parallel zu der Längsachse des Koppelelementes zumindest um den Faktor 10 niedriger als die Steifigkeit in Richtung der Längsachse ist.

Grundsätzlich ist anzumerken, dass oben angegebenes Verhältnis insbesondere bei bestimmten Einsatzzwecken eines Koppelelementes von Bedeutung ist, wie dies in der Figurenbeschreibung noch näher erläutert wird.

Generell lässt sich festhalten, dass die geräuschdämpfenden Eigenschaften umso besser sind, je weicher das Lager in Richtung normal auf die Längsachse des Koppelelementes, insbesondere in Vertikalrichtung (betrachtet in Einbaulage) ist.

Schließlich betrifft die Erfindung auch noch ein Schienenfahrzeug, bei dem ein oder mehrere solcher Koppelelemente zum Einsatz kommen.

Insbesondere ist dabei das Koppelelement zwischen einem Drehgestellrahmen und einem Wagenkasten oder zwischen einem Radsatz und einem Drehgestellrahmen oder zwischen einem Radsatz und einem Wagenkasten oder zwischen einem Bauteil am Radsatz, wie Motor oder Getriebe, und einem Wagenkasten, oder zwischen einem Bauteil am Radsatz (Motor, Getriebe) und einem Drehgestellrahmen angeordnet.

Im folgenden ist die Erfindung an Hand der Zeichnung näher erläutert. In dieser zeigen

Fig. 1 und Fig. 2 prinzipielle Anordnungen eines Schlingerdämpfers in einem Drehgestellt eines Fahrwerkes eines Schienenfahrzeuges in einem Vertikalschnitt sowie einem Horizontalschnitt durch ein Drehgestell,

Fig. 3 und Fig. 4 prinzipielle Anordnungen einer Längsmitnahme in einem Drehgestellt eines Fahrwerkes eines Schienenfahrzeuges in einem Vertikalschnitt sowie einem Horizontalschnitt durch ein Drehgestell,

Fig. 5a- Fig. 7b verschiedene Anordnungen von Schwingungstilgern an einem erfindungsgemäßen Koppelelement in einer schematischen Seiten- bzw. Vorderansicht,

Fig. 8 und Fig. 9 eine Gegenüberstellung eine "steifen" und einer "weichen" Lagerung eines Koppelelementes,

Fig. 10 den Verlauf der dynamischen Steifigkeit eines Koppelelementes als Funktion der Erregerfrequenz,

Fig. 11a - Fig. 15b verschiedene Ausführungsformen von Koppelelementen mit einem Dämpfungsbelag in einer schematischen Seiten- bzw. Vorderansicht, und

Fig. 16a und 16b schematische Ansichten von Lagern für die Verwendung im Zusammenhang mit der Erfindung.

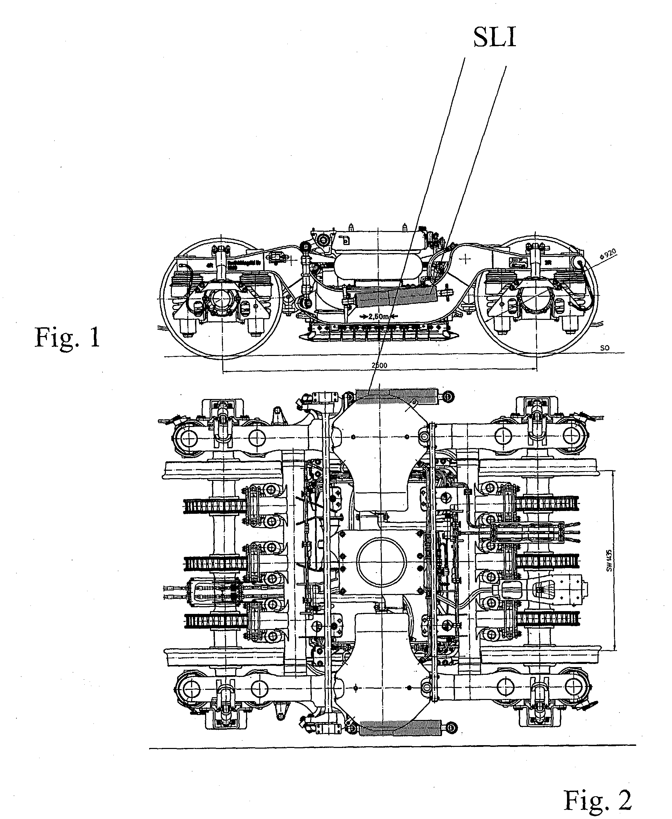

Figur 1 und 2 zeigen als Koppelelement einen Schlingerdämpfer SLI, der zwischen Fahrwerkrahmen und der (nicht dargestellten) Schlingerdämpferkonsole des Wagenkastens angeordnet ist.

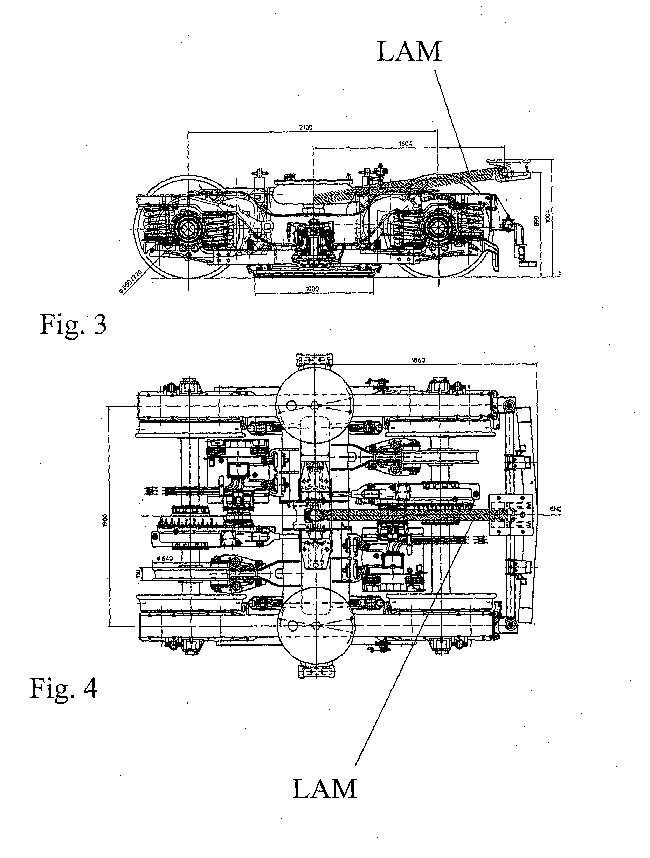

Weiters zeigen die Figuren 3 und 4 als Beispiel für ein erfindungsgemäßes Koppelelement eine Längsmitnahme LAM, die zwischen der Mitte des Drehgestellrahmens und dem Wagenkasten befestigt ist.

Ganz allgemein handelt es sich bei den erfindungsgemäßen Koppelelementen um längliche Bauelemente, wobei unter länglich ein Verhältnis von Länge zu Durchmesser (bzw. Quererstreckung) von in der Regel 5 : 1 oder mehr zu verstehen ist. In Einzelfällen können die genannten Probleme aber auch bei länglichen Bauelementen, die ein geringeres Verhältnis als 5 : 1 aufweisen, auftreten.

Diese Koppelelemente können Bauteile eines Schienenfahrzeuges, etwa eines Waggons oder Triebwagens miteinander verbinden, es ist aber auch möglich, dass Bauteile von verschiedenen Schienenfahrzeugen eines Fahrzeugverbundes, also etwa zwei Waggons oder eine Waggon mit einem Triebwagen etc. gekoppelt sein.

Unangenehme Geräuschentwicklungen in Schienenfahrzeugen entstehen, wie sich herausgestellt hat, besonders durch Resonanzschwingungen solcher Koppelelemente in einer Richtung normal auf Ihre Längsachse. Erfindungsgemäß werden daher die Resonanzschwingungen solcher Koppelelemente entsprechend betilgt und/oder bedämpft, um die Geräuschentwicklung zu reduzieren.

Im Folgenden sind verschiedene Möglichkeiten der Betilgung bzw. Bedämpfung dargestellt, wobei an dieser Stelle angemerkt ist, dass auch beliebige Kombinationen dieser Ausführungsformen möglich sind, um einen gewünschten Effekt zu erreichen oder um eine noch bessere Betilgung/Bedämpfung zu erzielen.

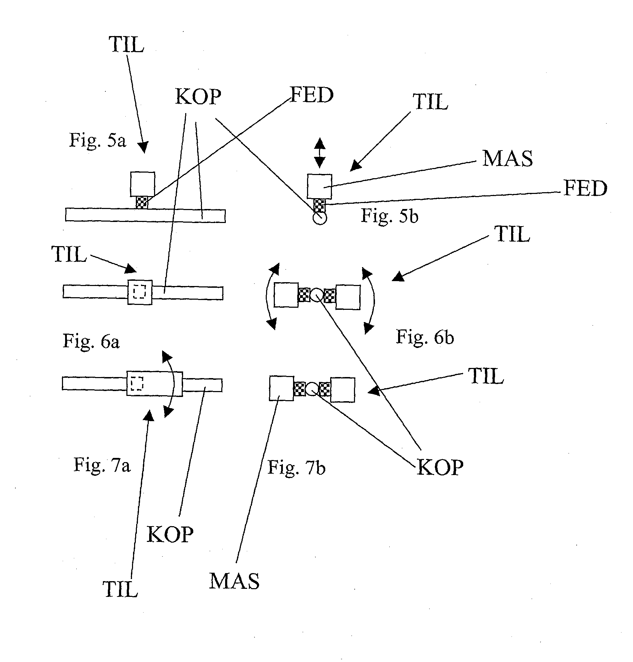

Die Figuren 5a - 7b zeigen verschiedenen Anordnungsmöglichkeiten von Schwingungstilgern TIL an einem Koppelelement KOP, wobei es sich bei dem Tilger TIL nach Fig. 5a und 5b um einen Longitudinalschwinger, und bei den Schwingungstilgern TIL nach den Figuren 6a, 6b, 7a und 7b um Biegeschwinger handelt.

In der Regel sind die im Frequenzspektrum am tiefsten auftretenden Schwingungen und somit die am unangenehmsten Schwingungen Biegeschwingungen. Eine besonders gute Geräuschdämmung kann daher bereits erreicht werden kann, wenn diese Biegeschwingungen gedämpft/betilgt werden, wozu es günstig ist, wenn der Tilger in der Nähe des Schwingungsbauches des Schwingung sitzt und im Wesentlichen in Richtung der Auslenkung des Koppelelementes schwingt.

Grundsätzlich besteht ein solcher Schwingungstilger aus zumindest einer Masse, welche über ein elastisches Element wie im Folgenden noch an Hand verschiedener Ausführungsformen beschrieben an dem Koppelelement befestigbar ist.

Der gezeigte Tilger TIL ist beispielsweise mit einem nicht dargestellten Schalenelement, welches mit einer Gewindestange fest verbunden ist, an dem Koppelelement befestigt. Das Schalenelement ist beispielsweise aus Blech hergestellt und etwa mittels Klemmen, beispielsweise Schlauchklemmen, an dem Koppelelement befestigt. Die Gewindestange ist mittels einer Schweißverbindung mit dem Schalenelement verbunden. Auf die Gewindestange ist ein als Gummirundlager ausgebildetes Federelement FED aufgesetzt, an welchem ein oder mehrere Massenelemente MAS befestigt sind.

Das als Gummifeder ausgebildete Federelement FED kann aber auch fest mit dem Schalenelement verbunden sei, beispielsweise mittels einer Klebeverbindung. Das Massenelement selbst ist fest mit dem Federelement verbunden, wobei beispielsweise eine Aufnahme in der Gummifeder für das Massenelement MAS vorgesehen ist.

Ein Tilger wird vorzugsweise, um seine voll Wirkung entfalten zu können, in der Nähe des Schwingungsbauches der Hauptschwingung angebracht, die sich z.B. in etwa auf halber Länge der Längsachse des Koppelelementes KOP befindet. Wie den Figuren 6a, b und 7a, b zu entnehmen ist, ist ein zweiter Schwingungstilger vorzugsweise symmetrisch, d. h. in Bezug auf die Längsachse an der gegenüberliegenden Stelle des Koppelelementes angebracht.

Weitere nicht dargestellte Schwingungstilger können ebenfalls noch an dem Koppelelement angebracht sein, vorzugsweise im Bereich der Schwingungsbäuche von höheren Eigenfrequenzen der zu betilgenden Eigenschwingung.

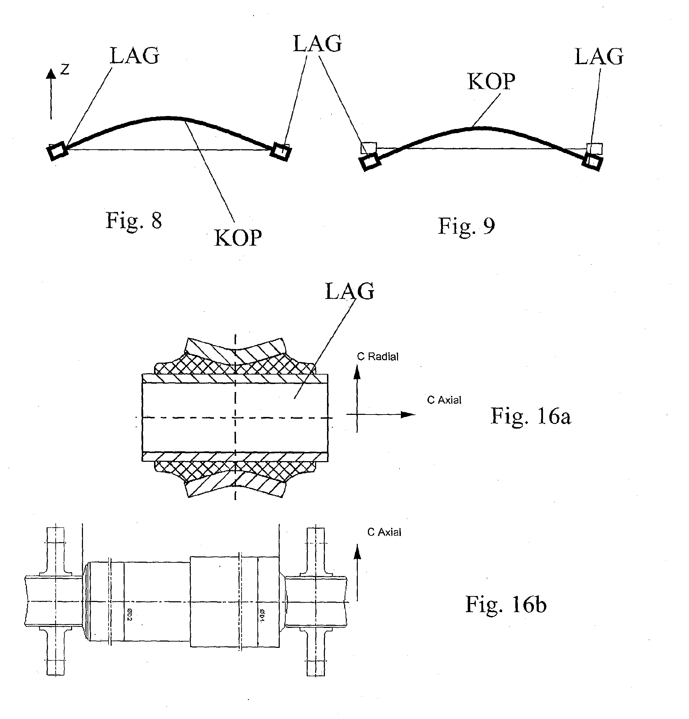

Figur 8 zeigt ein Koppelelement KOP, welches an seinen Enden an den entsprechenden Bauteilen eines Schienenfahrzeuges gelagert ist. Bei einem solchen Lager LAG handelt es sich beispielsweise um ein bekanntes Gummilager. Üblicherweise werden die Steifigkeiten nur in Längsrichtung des Koppelelements definiert, sodass es zu starken Resonanzschwingungen mit einer starken Auslenkung des Koppelelementes im Schwingungsbauch kommen kann.

Bei einer Lagerung entsprechend Figur 9, bei der in eine Richtung normal auf die Längsachse eine geringere Steifigkeit des Lagers gewählt wird, können diese Resonanzschwingungen wesentlich abgeschwächt werden. Wie der nicht maßstäblich zu verstehenden schematischen Darstellung nach Figur 9 zu entnehmen gibt dabei das Lager in seiner "weicheren Richtung" nach, wodurch Schwingungsenergie absorbiert und die Resonanzauslenkung des Koppelelementes wesentlich abgeschwächt wird.

Die Richtung der "weicheren" Steifigkeit ist dabei im wesentlichen normal auf die Längsachse des Koppelelementes und vorzugsweise hauptsächlich in vertikaler Richtung.

Um den gewünschten Effekt einer guten Geräuschdämpfung zu erreichen, ist ein Verhältnis der Steifigkeiten in Richtung der Längsachse zu einer "weichen" Richtung normal auf die Längsachse von mindestens 10 : 1 günstig, wobei in der Regel Verhältnisse von 20 : 1, 30 : 1 etc. eine noch bessere Dämpfung liefern.

Wie schon weiter oben angesprochen, steigen die geräuschdämmenden Eigenschaften an, je weicher das Lager in der "weichen" Richtung gemacht wird.

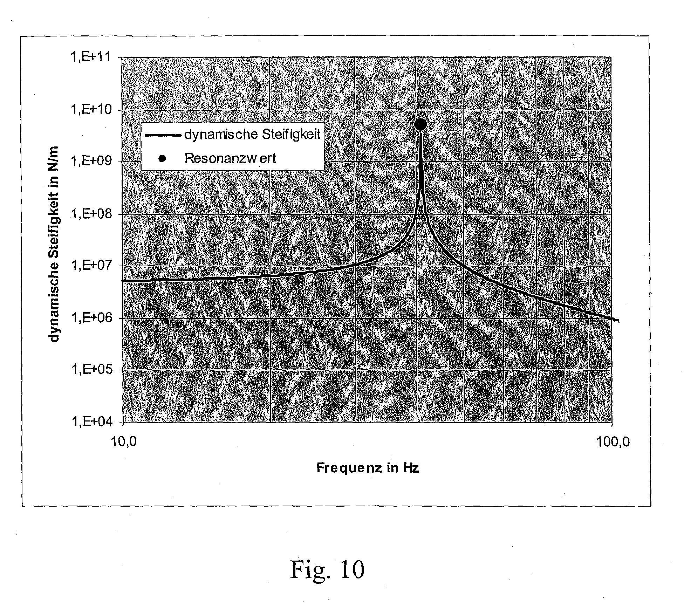

Grundsätzlich kann die maximale dynamische Steifigkeit des Koppelelements (siehe auch Figur 10) im Resonanzpunkt mit $c_{Anlenkung}/\tan(phi)$ abgeschätzt werden, wobei $c_{Anlenkung}$ die Steifigkeit der Anlenkung des Koppelelements senkrecht zur Längsausdehnung in Richtung der Modenform und phi der Phasenwinkel der dynamischen Steifigkeit dieser Anlenkung ist, d. h. der Winkel (Dämpfungswinkel) zwischen Kraft und Weg bei einer sinusförmigen Belastung. Dadurch sind vor allem solche Koppelelemente für die Geräuschweiterleitung kritisch, die aus funktionellen Gründen sehr steif angelenkt sind, wie etwa Schlingerdämpfer oder Drehhemmstangen.

In diesem Fall ist lediglich die Verwendung spezieller Lager, die einfach gegen herkömmliche Lager ausgetauscht werden könnten, notwendig, um zum erwünschten Ziel zu kommen.

Bei zwei konkreten Ausführungsformen weist das Lager folgende Werte für die Steifigkeiten auf, so dass sich die in Klammer stehenden Verhältnisse ($c_{axial}/c_{radial}$) ergeben, die etwas geringer als 1 : 10 sind:

$$c_{radial} = 9,4 \text{ kN/mm}, c_{axial} = 0,7 \text{ kN/mm} (1 : 13,43)$$

$$c_{radial} = 70 \text{ kN/mm}, c_{axial} = 5,5 \text{ kN/mm} (1: 12,73)$$

Die entsprechenden Verhältnisse sind an Hand der Lager LAG in Figur 16a und 16b dargestellt.

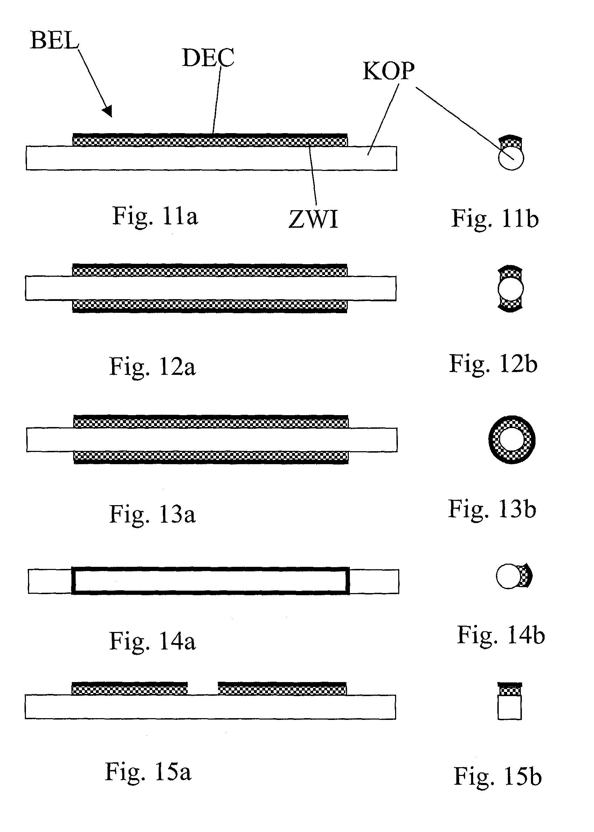

Weitere Varianten einer anderen erfindungsgemäßen Ausführungsform sind schließlich noch in den Figuren 11a - 15b jeweils in einer schematischen Seitenansicht und in einer schematischen Vorder- bzw. Rückansicht in Richtung der Längsachse dargestellt.

Das Koppelelement ist an seiner Außenseite mit einem Dämpfungsbelag versehen. Dieser Belag BEL, der etwa aus Blechstreifen besteht, kann beispielsweise auf dem Koppelelement aufgeklebt sein.

Wie der Zeichnung zu entnehmen, handelt es sich bei dem Dämpfungsbelag BEL vorzugsweise um einen mehrschichtigen Belag, der eine Zwischenschicht ZWI aus einer viskoelastischen Masse, welche auf dem Koppelelement aufgebracht ist, und einer auf der Zwischenschicht ZWI haftenden Deckschicht DEC aus einem metallischen Werkstoff bzw. einem kohlenstofffaserverstärkten Kunststoff (CFK) oder Kevlar besteht.

Schließlich besteht eine letzte Ausführungsform der Erfindung noch darin, dass das Koppelelement zumindest abschnittsweise hohl oder doppelwandig ausgebildet und in den Hohlräumen mit einem dämpfenden Füllstoff oder Belag gefüllt ist. Beispielsweise besteht der Füllstoff aus einem Elastomer, etwa aus Naturkautschuk mit höherem Füllstoffgehalt.

**Patentansprüche**

1. Koppelelement für ein Schienenfahrzeug, welches beispielsweise einen Wagenkasten mit einem Fahrwerk des Schienenfahrzeuges koppelt,
**dadurch gekennzeichnet, dass**
es hinsichtlich auftretender Resonanzschwingungen im Wesentlichen normal zu seiner Längsachse bedämpft und/oder betilgt ist.

2. Koppelelement nach Anspruch 1, **dadurch gekennzeichnet, dass** an ihm und/oder in ihm ein oder mehrere Mittel (TIL, BEL, LAG) zum Bedämpfen und/oder Betilgen von im Wesentlichen normal zu seiner Längsachse auftretenden Resonanzschwingungen angebracht sind.

3. Koppelelement nach Anspruch 2, **dadurch gekennzeichnet, dass** an ihm zumindest ein Schwingungstilger (TIL) befestigt ist, der aus zumindest einem Massenelement (MAS) und zumindest einem Federelement (FED) besteht, und das Massenelement (MAS) mit dem Federelement (FED) an dem Koppelelement (KOP) befestigt ist, wobei das zumindest eine Federelement sowie das/die Massenelement(e) dermaßen aufeinander abgestimmt sind, dass bei einer Anregung des Koppelelementes mit einer Erregerfrequenz, welche in einem Bereich der zumindest einen Eigenfrequenz des Koppelelementes liegt bzw. mit dieser übereinstimmt, zumindest ein Teil der Schwingungsenergie des Koppelelementes auf das zumindest eine Massenelement und/ oder das zumindest eine Federelement übergeht.

4. Koppelelement nach Anspruch 3, **dadurch gekennzeichnet, dass** der zumindest eine Schwingungstilger (TIL) im Bereich eines Schwingungsbauches der Eigenfrequenz der zu betilgenden Eigenschwingung an dem Koppelelement (KOP) befestigt ist.

5. Koppelelement nach Anspruch 3 oder 4, **dadurch gekennzeichnet, dass** der zumindest eine Schwingungstilger (TIL) in etwa auf halber Länge des Koppelelementes befestigt ist.

6. Koppelelement nach einem der Ansprüche 3 bis 5, **dadurch gekennzeichnet, dass** das zumindest eine Federelement (FED) schwingungsdämpfende Eigenschaften aufweist.

7. Koppelelement nach einem der Ansprüche 3 bis 6, **dadurch gekennzeichnet, dass** das zumindest eine Federelement (FED) als Gummifeder ausgebildet ist.

8. Koppelelement nach einem der Ansprüche 2 bis 7, **dadurch gekennzeichnet, dass** es an seiner Außen- oder Innenseite mit einem Dämpfungsbelag (BEL) versehen ist.

9. Koppelelement nach Anspruch 8, **dadurch gekennzeichnet, dass** der Dämpfungsbelag (BEL) aus Blechstreifen, die beispielsweise an dem Koppelelement aufgeklebt sind, besteht.

10. Koppelelement nach Anspruch 8 oder 9, **dadurch gekennzeichnet, dass** der Dämpfungsbelag (BEL) aus mehreren Schichten (DEC, ZWI) besteht.

11. Koppelelement nach Anspruch 10, **dadurch gekennzeichnet, dass** der mehrschichtige Dämpfungsbelag (BEL) aus einer Zwischenschicht (ZWI) aus einer viskoelastischen Masse, welche auf dem Koppelelement (KOP) aufgebracht ist, und einer auf der Zwischenschicht (ZWI) haftenden Deckschicht (DEC) aus einem metallischen Werkstoff, einem kohlenstofffaserverstärkten Kunststoff (CFK) oder Kevlar besteht.

12. Koppelelement nach einem der Ansprüche 2 bis 9, **dadurch gekennzeichnet, dass** es zumindest abschnittsweise hohl oder doppelwandig ausgebildet und in den Hohlräumen mit einem dämpfenden Füllstoff gefüllt ist.

13. Koppelelement nach einem der Ansprüche 1 bis 12, **dadurch gekennzeichnet, dass** es an seinen Enden elastisch gelagert ist und die Lager (LAG) dämpfende Eigenschaften aufweisen.

14. Koppelelement nach Anspruch 13, **dadurch gekennzeichnet, dass** die Lager (LAG) Gummilager sind.

15. Koppelelement nach Anspruch 13 oder 14, **dadurch gekennzeichnet, dass** die Steifigkeit der Lager (LAG) in mindestens einer Richtung im wesentlichen normal auf eine Richtung parallel zu der Längsachse des Koppelelementes (KOP) zumindest um den Faktor 10 niedriger als die Steifigkeit in Richtung der Längsachse ist.

16. Schienenfahrzeug mit zumindest einem Koppelelement nach einem der Ansprüche 1 bis 15.

17. Schienenfahrzeug nach Anspruch 16, **dadurch gekennzeichnet, dass** das Koppelelement (KOP) zwischen einem Drehgestellrahmen und einem Wagenkasten oder zwischen einem Radsatz und einem Drehgestellrahmen oder zwischen einem Radsatz und einem Wagenkasten oder zwischen einem Bauteil am Radsatz, wie Motor oder Getriebe, und einem Wagenkasten, oder zwischen einem Bauteil am Radsatz (Motor, Getriebe) und einem Drehgestellrahmen angeordnet ist.

SLI

Fig. 1

Fig. 2

LAM

Fig. 3

Fig. 4

LAM

TIL

KOP          FED          TIL

Fig. 5a                    MAS

                           FED

                    Fig. 5b

TIL                        TIL

Fig. 6a                    Fig. 6b

Fig. 7a          TIL       Fig. 7b        TIL

          KOP                    KOP

     TIL        MAS

z

LAG

LAG

KOP

LAG

Fig. 8

KOP

Fig. 9

LAG

C Radial

C Axial

Fig. 16a

C Axial

Fig. 16b

Fig. 10

BEL          DEC                KOP

Fig. 11a          ZWI          Fig. 11b

Fig. 12a          Fig. 12b

Fig. 13a          Fig. 13b

Fig. 14a          Fig. 14b

Fig. 15a          Fig. 15b